# EUROPEAN PATENT APPLICATION

(11) **EP 4 826 889 A1**
(43) Date of publication of application: **21.10.2026**
(21) Application number: 24928257.5
(22) Date of filing: 31.12.2024
(51) Int. Cl.: H01M 50/533

(54) **BATTERY CELL, BATTERY AND ELECTRIC DEVICE**

(30) Priority: 06.03.2024 CN 202410256669
(71) Applicant: Contemporary Amperex Technology Co., Limited, Ningde, Fujian 352100 (CN)
(72) Inventor: ZHOU, Chaoyang, Ningde, Fujian 352100 (CN); YANG, Chenglong, Ningde, Fujian 352100 (CN); GAO, Jingyu, Ningde, Fujian 352100 (CN); HU, Yang, Ningde, Fujian 352100 (CN); YANG, Rui, Ningde, Fujian 352100 (CN); ZHANG, Haiming, Ningde, Fujian 352100 (CN); YU, Honggang, Ningde, Fujian 352100 (CN); JIN, Haizu, Ningde, Fujian 352100 (CN); YAO, Yuanda, Ningde, Fujian 352100 (CN); WEI, Xichen, Ningde, Fujian 352100 (CN); LI, Zhiyao, Ningde, Fujian 352100 (CN)
(74) Representative: Aera A/S
(86) International application number: PCT/CN2024/144686
(87) International publication number: WO 2025/185329

(57) **Abstract**

The present application relates to the field of batteries. Provided are a battery cell, a battery and an electric device. The battery cell comprises a casing and an electrode assembly, wherein the electrode assembly is accommodated in the casing. The electrode assembly comprises a body portion, a first tab and a second tab, wherein the first tab and the second tab respectively protrude from two ends of the body portion, and the first tab and the second tab are asymmetrically arranged. The first tab and the second tab of the battery cell are asymmetrically arranged; and compared with the solution in the prior art where two tabs of a battery cell are symmetrically arranged, the first tab and the second tab of the electrode assembly of the battery cell have no axis of symmetry, and the first tab and the second tab are stressed unevenly, such that the electrode assembly does not easily rotate, and thus the first tab and the second tab are not easily torn, thereby facilitating the prolonging of the service life of the battery cell.

## Description

### CROSS-REFERENCE TO RELATED APPLICATION

The present application claims the priority of Chinese Patent Application No. 202410256669.0 filed on March 6, 2024 and entitled "BATTERY CELL, BATTERY AND ELECTRICAL DEVICE", the entire contents of which are incorporated herein by reference.

### TECHNICAL FIELD

The present application relates to the field of batteries, and in particular, to a battery cell, a battery, and an electrical device.

### BACKGROUND

Batteries are widely used in the field of new energy, for example, electric vehicles and new energy vehicles, which have become a new development trend in the automobile industry. Development of battery technologies needs to take many design factors into consideration at the same time, for example, performance parameters such as energy density, discharge capacity, and charge-discharge rate. In addition, the service life of the batteries also needs to be taken into consideration. However, current batteries have shorter service life.

### SUMMARY OF THE INVENTION

Objectives of embodiments of the present application are to provide a battery cell, a battery, and an electrical device, which are intended to alleviate the problem of shorter service life of batteries in the related art.

In a first aspect, an embodiment of the present application provides a battery cell. The battery cell includes a shell and an electrode assembly, the electrode assembly is accommodated in the shell, the electrode assembly includes a main body portion, a first tab, and a second tab, and the first tab and the second tab respectively protrude from two ends of the main body portion, wherein the first tab and the second tab are asymmetrically arranged.

In the above technical solution, the first tab and the second tab of the battery cell are asymmetrically arranged. Compared with a solution in the prior art where two tabs of a battery cell are symmetrically arranged, the first tab and the second tab of the electrode assembly of the battery cell have no axis of symmetry, the first tab and the second tab are stressed unevenly, such that the electrode assembly does not easily rotate, and thus the first tab and the second tab are not easily torn, which is beneficial to prolonging the service life of the battery cell.

As an optional technical solution of the embodiment of the present application, the first tab and the second tab respectively protrude from two ends of the main body portion in a first direction; the first tab has a first intermediate section parallel to the first direction, the second tab has a second intermediate section parallel to the first direction, the first intermediate section is spaced apart from the second intermediate section in a second direction, and the second direction intersects with the first direction.

In the above technical solution, a distance exists between the first intermediate section of the first tab and the second intermediate section of the second tab in the second direction, and the first intermediate section and the second intermediate section are not in the same plane. In this way, positions of the first tab and the second tab in the first direction can be staggered. When the battery cell is subjected to vibration, the first tab and the second tab are stressed unevenly, such that the electrode assembly does not easily rotate under the action of an external force, and thus the first tab and the second tab are not easily torn, which is beneficial to prolonging the service life of the battery cell. In addition, since the first intermediate section is spaced apart from the second intermediate section in the second direction, a center distance between the first and second tabs is increased, and heat generated by the first tab and heat generated by the second tab are not prone to affecting each other, which is beneficial to prolonging the service life of the battery cell.

As an optional technical solution of the embodiment of the present application, the shell includes a first wall portion, and the first wall portion is provided with an electrolyte injection hole; and in the first direction, the first tab is arranged opposite to the first wall portion, and a projection of the electrolyte injection hole does not overlap a projection of the first tab.

In the above technical solution, by ensuring that the projection of the electrolyte injection hole does not overlap the projection of the first tab, the first tab can avoid the electrolyte injection hole, making the first tab and the electrolyte injection hole not prone to interference. During electrolyte injection, the first tab is not prone to blocking the electrolyte injection hole.

As an optional technical solution of the embodiment of the present application, the main body portion has a first end face at one end in the first direction, the first tab protrudes from the first end face, and the first end face includes a first region and a second region; in the second direction, the first region and the second region are located on two sides of the first tab respectively, and a maximum length of the first region is greater than a maximum length of the second region; and in the first direction, the projection of the electrolyte injection hole is located in the first region.

In the above technical solution, the maximum length of the first region in the second direction is greater than the maximum length of the second region in the second direction. Compared with the prior art, the first tab is offset, which can not only make the first tab and the second tab asymmetrically arranged, reducing the risk of the electrode assembly rotating, but can also avoid the electrolyte injection hole, reducing the risk of the first tab blocking the electrolyte injection hole during electrolyte injection.

As an optional technical solution of the embodiment of the present application, the shell includes the first wall portion, and the first wall portion is provided with a pressure relief mechanism; and in the first direction, the first tab is arranged opposite to the first wall portion, and a projection of the pressure relief mechanism does not overlap the projection of the first tab.

In the above technical solution, by ensuring that the projection of the pressure relief mechanism does not overlap the projection of the first tab, the first tab can avoid the pressure relief mechanism, such that the first tab and the pressure relief mechanism are not prone to interference, which is not prone to affecting pressure relief of the pressure relief mechanism.

As an optional technical solution of the embodiment of the present application, the main body portion has a first end face at one end in the first direction, the first tab protrudes from the first end face, and the first end face includes a first region and a second region; in the second direction, the first region and the second region are located on two sides of the first tab respectively, and a maximum length of the first region is greater than a maximum length of the second region; and in the first direction, the projection of the pressure relief mechanism is located in the first region.

In the above technical solution, the maximum length of the first region in the second direction is greater than the maximum length of the second region in the second direction. Compared with the prior art, the first tab is offset, which can not only make the first tab and the second tab asymmetrically arranged, reducing the risk of the electrode assembly rotating, but can also avoid the pressure relief mechanism, such that the first tab is not prone to affecting pressure relief of the pressure relief mechanism.

As an optional technical solution of the embodiment of the present application, in the second direction, a width of the first tab is less than a width of the second tab.

In the above technical solution, by making the width of the first tab less than the width of the second tab, the first tab can better avoid the electrolyte injection hole or the pressure relief mechanism, and thus the first tab is not prone to affecting electrolyte injection of the electrolyte injection hole or pressure relief of the pressure relief mechanism.

As an optional technical solution of the embodiment of the present application, a height by which the first tab protrudes from the main body portion is greater than a height by which the second tab protrudes from the main body portion.

In the above technical solution, the width of the first tab is less than the width of the second tab, which makes a welding area of the first tab when it is welded to a conductive structure smaller than a welding area of the second tab when it is welded to a corresponding conductive structure, making a current flow area at a welding position of the first tab and the conductive structure smaller. By making the height by which the first tab protrudes from the main body portion greater than the height by which the second tab protrudes from the main body portion, the welding area between the first tab and the conductive structure is increased, thereby increasing the current flow area at the welding position of the first tab and the conductive structure.

As an optional technical solution of the embodiment of the present application, the battery cell includes a first conductive element and a second conductive element, the first tab is welded to the first conductive element to form a first weld mark region with an area of S₁, the second tab is welded to the second conductive element to form a second weld mark region with an area of S₂, and 0.8≤S₁/S₂≤1.2 is satisfied.

In the above technical solution, a ratio of the area of the first weld mark region to the area of the second weld mark region is between 0.8 and 1.2, indicating that the areas of the first weld mark region and the second weld mark region are approximately equal. Thus, a current flow area at a connection position of the first tab and the first conductive element is approximately the same as a current flow area at a connection position of the second tab and the second conductive element.

As an optional technical solution of the embodiment of the present application, 0.9≤S₁/S₂≤1.1.

In the above technical solution, the ratio of the area of the first weld mark region to the area of the second weld mark region is between 0.9 and 1.1, indicating that the areas of the first weld mark region and the second weld mark region are closer. Thus, the current flow area at the connection position of the first tab and the first conductive element is approximately the same as the current flow area at the connection position of the second tab and the second conductive element.

As an optional technical solution of the embodiment of the present application, the battery cell includes a first electrode terminal and a first adapter, the first electrode terminal is arranged on the shell, the first adapter connects the first electrode terminal and the first tab, and the first adapter includes the first conductive element.

In the above technical solution, the first tab is electrically connected to the first electrode terminal through the first adapter, and the first adapter and the first tab, as well as the first adapter and the first electrode terminal, can be welded separately, which facilitates manufacturing.

As an optional technical solution of the embodiment of the present application, the first weld mark region includes a first weld mark portion and a second weld mark portion, and in the second direction, the first weld mark portion and the second weld mark portion are located on two sides of the first electrode terminal respectively.

In the above technical solution, in the second direction, the first weld mark portion and the second weld mark portion are arranged on the two sides of the first electrode terminal respectively. That is, the first tab is welded to the first adapter on both sides of the first electrode terminal. In this way, the first tab is restricted on both sides of the first electrode terminal, so that the first tab is not prone to swing when the battery cell is vibrated, which is conducive to improving the structural stability of the electrode assembly and improving the service life of the battery cell.

As an optional technical solution of the embodiment of the present application, the battery cell includes a second electrode terminal and a second adapter, the second electrode terminal is arranged on the shell, the second adapter connects the second electrode terminal and the second tab, and the second adapter includes the second conductive element.

In the above technical solution, the second tab is electrically connected to the second electrode terminal through the second adapter, and the second adapter and the second tab, as well as the second adapter and the second electrode terminal, can be welded separately, which facilitates manufacturing.

As an optional technical solution of the embodiment of the present application, the second weld mark region includes a third weld mark portion and a fourth weld mark portion, and in the second direction, the third weld mark portion and the fourth weld mark portion are located on two sides of the second electrode terminal respectively.

In the above technical solution, in the second direction, the third weld mark portion and the fourth weld mark portion are arranged on the two sides of the second electrode terminal respectively. That is, the second tab is welded to the second adapter on both sides of the second electrode terminal. In this way, the second tab is restricted on both sides of the second electrode terminal, so that the second tab is not prone to swing when the battery cell is vibrated, which is conducive to improving the structural stability of the electrode assembly and improving the service life of the battery cell.

As an optional technical solution of the embodiment of the present application, the first tab is a negative electrode tab, and the second tab is a positive electrode tab.

In the above technical solution, generally speaking, heat generated by the positive electrode tab is higher than that generated by the negative electrode tab. In some embodiments of the present application, the width of the negative electrode tab is smaller than the width of the positive electrode tab, and the height by which the negative electrode tab protrudes from the main body portion is greater than the height by which the positive electrode tab protrudes from the main body portion. In comparison, a cross-sectional area of the negative electrode tab perpendicular to its extension direction is smaller than a cross-sectional area of the positive electrode tab perpendicular to its extension direction. The current flow area of the positive electrode tab is slightly larger than that of the negative electrode tab, thereby reducing the heat generated by the positive electrode tab.

As an optional technical solution of the embodiment of the present application, the main body portion has a third intermediate section parallel to the first direction; wherein the third intermediate section coincides with the second intermediate section, and the third intermediate section is spaced apart from the first intermediate section in the second direction; or in the second direction, the first intermediate section and the second intermediate section are located on two sides of the third intermediate section.

In the above technical solution, when the third intermediate section coincides with the second intermediate section and the third intermediate section is spaced apart from the first intermediate section in the second direction, the first tab deviates from the third intermediate section, thus a center distance between the first and second tabs is increased, and heat generated by the first tab and heat generated by the second tab are not prone to affecting each other, which is beneficial to prolonging the service life of the battery cell. In the second direction, when the first and second intermediate sections are located on two sides of the third intermediate section, the first tab can deviate upward from the third intermediate section in the second direction, the second tab can deviate downward from the third intermediate section in the second direction, and thus the center distance between the first and second tabs is further increased. The distance between the first and second tabs is greater, such that the heat generated by the first tab and the heat generated by the second tab are less likely to affect each other, which is more beneficial to prolonging the service life.

As an optional technical solution of the embodiment of the present application, in the second direction, a distance between the first intermediate section and the second intermediate section is A, a maximum dimension of the main body portion is L, and 0.05≤A/L≤0.5 is satisfied.

In the above technical solution, by making a ratio of the distance between the first intermediate section and the second intermediate section to the maximum dimension of the main body portion in the second direction between 0.05 and 0.5, the distance between the first intermediate section and the second intermediate section is larger, and the heat generated by the first tab and the heat generated by the second tab are less likely to affect each other, which is beneficial to prolonging the service life of the battery cell.

As an optional technical solution of the embodiment of the present application, 0.1≤A/L≤0.3.

In the above technical solution, by making the ratio of the distance between the first intermediate section and the second intermediate section to the maximum dimension of the main body portion in the second direction between 0.1 and 0.3, the distance between the first intermediate section and the second intermediate section is larger, and the heat generated by the first tab and the heat generated by the second tab are less likely to affect each other, which is beneficial to prolonging the service life of the battery cell. Furthermore, the widths of the first and second tabs can also be set larger, which ensures the current flow areas of the first and second tabs to a certain extent.

As an optional technical solution of the embodiment of the present application, the shell is a square shell, a length of the shell in the second direction is H, a length of the shell in the first direction is B, a thickness of the shell is D, and B/H≥2.4 and H≥D are satisfied; and the first direction is a width direction of the shell, and the second direction is a height direction of the shell.

In the above technical solution, an aspect ratio of the shell is greater than or equal to 2.4, an internal space of such battery cell is small. Adopting the above asymmetric tab design can not only make the first tab and the second tab subjected to uneven forces, such that the electrode assembly does not easily rotate, and thus the first tab and the second tab are not easily torn, which is beneficial to prolonging the service life of the battery cell. It can also make full use of the internal space of the battery cell and thus improve the energy density of the battery cell.

As an optional technical solution of the embodiment of the present application, B/H≥3.

In the above technical solution, the aspect ratio of the shell is greater than or equal to 3, an internal space of such battery cell is small. Adopting the above asymmetric tab design can not only make the first tab and the second tab subjected to uneven forces, such that the electrode assembly does not easily rotate, and thus the first tab and the second tab are not easily torn, which is beneficial to prolonging the service life of the battery cell. It can also make full use of the internal space of the battery cell and thus improve the energy density of the battery cell.

As an optional technical solution of the embodiment of the present application, the first tab and the second tab respectively protrude from two ends of the main body portion in the first direction; and the shell includes a case, a first end cap, and a second end cap. In the first direction, two ends of the case have openings; and the first end cap and the second end cap respectively close the openings in the two ends of the case.

In the above technical solution, the first end cap and the second end cap respectively close the openings in the two ends of the case, the first tab can be electrically connected to a conductive structure on the first end cap, and the second tab can be electrically connected to a conductive structure on the second end cap, making manufacturing simple and convenient.

In a second aspect, an embodiment of the present application further provides a battery. The battery includes the above battery cell.

In a third aspect, an embodiment of the present application further provides an electrical device. The electrical device includes the above battery cell or the above battery.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
FIG. 2 is an exploded view of a battery provided by some embodiments of the present application;
FIG. 3 is a schematic structural diagram of a battery cell provided in some embodiments of the present application;
FIG. 4 is an exploded view of a battery cell provided in some embodiments of the present application;
FIG. 5 is a schematic structural diagram of an electrode assembly provided in some embodiments of the present application;
FIG. 6 is a schematic front view of an electrode assembly provided in some embodiments of the present application;
FIG. 7 is a schematic front view of a battery cell provided in some embodiments of the present application;
FIG. 8 is a sectional view of a position A-A in FIG. 7;
FIG. 9 is a simplified schematic diagram of welding of an electrode assembly provided in some embodiments of the present application;
FIG. 10 is a schematic top view of an electrode assembly provided in some embodiments of the present application;
FIG. 11 is a schematic bottom view of an electrode assembly provided in some embodiments of the present application;
FIG. 12 is a simplified schematic diagram of welding of an electrode assembly provided in some other embodiments of the present application;
FIG. 13 is a schematic front view of an electrode assembly provided in some other embodiments of the present application; and
FIG. 14 is a schematic side view of a battery cell provided in some embodiments of the present application.

Reference numerals: 10-Box body; 11-First part; 12-Second part; 20-Battery cell; 21-Shell; 211-Case; 212-First end cap; 2121-Electrolyte injection hole; 213-Second end cap; 22-Electrode assembly; 221-Main body portion; 2211-Third intermediate section; 2212-First end face; 2212a-First region; 2212b-Second region; 2213-Second end face; 2213a-Third region; 2213b-Fourth region; 222-First tab; 2221-First intermediate section; 223-Second tab; 2231-Second intermediate section; 231-First electrode terminal; 232-Second electrode terminal; 241-First conductive element; 2411-First weld mark portion; 2412-Second weld mark portion; 242-Second conductive element; 2421-Third weld mark portion; 2422-Fourth weld mark portion; 25-Pressure relief mechanism; 100-Battery; 200-Controller; 300-Motor; and 1000-Vehicle.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"Plurality" appearing in the present application refers to two or more (including two).

In the present application, a battery cell may include, but is not limited to, a lithium-ion secondary battery, a lithium-ion primary battery, a lithium-sulfur battery, a sodium-lithium-ion battery, a sodium-ion battery, a magnesium-ion battery, or the like. The battery cell may be in a cylindrical, flat, or rectangular solid shape, or in other shapes. The battery cell may be a cylindrical battery cell, a square battery cell, and a pouch battery cell.

A battery mentioned in the embodiments of the present application refers to a single physical module including one or more battery cells to provide higher voltage and capacity. For example, the battery mentioned in the present application may include a battery module, a battery pack, or the like. The battery generally comprises a box body for packaging one or more battery cells. The box body can prevent liquid or other foreign matters from affecting charging or discharging of the battery cells to some extent.

The battery cell comprises an electrode assembly and an electrolytic solution, and the electrode assembly is composed of a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. The parts, not coated with the negative electrode active material layer, of the negative electrode current collector protrude from the part, coated with the negative electrode active material layer, of the negative electrode current collector, and the parts, not coated with the negative electrode active material layer, of the negative electrode current collector serve as negative tabs. The negative electrode current collector may be made of copper, and the negative electrode active substance may be carbon or silicon or the like. In order to ensure, to a certain extent, that no fusing occurs when a large current passes, there are a plurality of positive electrode tabs which are stacked together, and there are a plurality of negative electrode tabs which are stacked together. The separator may be of a material such as polypropylene (PP) or polyethylene (PE). In addition, the electrode assembly may have a winded structure or a stacked structure, but the embodiments of the present application are not limited thereto.

At present, from the development of market situation, the application of batteries is becoming more and more extensive. Batteries are used not only in energy storage power source systems in hydraulic, thermal, wind, and solar power stations, but also in electric means of transportation such as electric bicycles, electric motorcycles, and electric vehicles, as well as in many fields such as military equipment and aerospace. With the continuous expansion of the application field of batteries, their market demand is also constantly increasing.

Development of battery technologies needs to take many design factors into consideration at the same time, for example, performance parameters such as energy density, discharge capacity, and charge-discharge rate. In addition, the service life of the batteries also needs to be taken into consideration. However, current batteries have shorter service life.

In the prior art, an electrode assembly includes a main body portion and two tabs, with the two tabs protruding from two ends of the main body portion and arranged symmetrically. However, when a battery cell made with this type of electrode assembly is subjected to a vibration condition, the two tabs are prone to rotating slightly around a line connecting their center points as an axis under the action of external forces because forces on the two tabs are consistent. This can lead to the tabs tearing, damage to the battery cell, and shorter service life of the battery cell.

In view of this, an embodiment of the present application provides a battery cell. The battery cell includes a shell and an electrode assembly, and the electrode assembly is accommodated in the shell. The electrode assembly includes a main body portion, a first tab and a second tab, and the first tab and the second tab respectively protrude from two ends of the main body portion. The first tab and the second tab are asymmetrically arranged.

The first tab and the second tab of the battery cell are asymmetrically arranged. Compared with a solution in the prior art where two tabs of the battery cell are symmetrically arranged, the first tab and the second tab of the electrode assembly of the battery cell have no axis of symmetry, the first tab and the second tab are stressed unevenly, such that the electrode assembly does not easily rotate, and thus the first tab and the second tab are not easily torn, which is beneficial to prolonging the service life of the battery cell.

The technical solutions described in the embodiments of the present application are applicable to batteries and electrical devices using batteries.

The electrical devices may be vehicles, mobile phones, portable devices, laptops, ships, spacecrafts, electric toys, electric tools, and the like. The spacecrafts include airplanes, rockets, space shuttles, spaceships, and the like; the electric toys include fixed or mobile electric toys, such as game consoles, electric vehicle toys, electric ship toys, and electric airplane toys; the electric tools include electric tools for metal cutting, electric tools for grinding, electric tools for assembling and electric tools for railways, such as electric drills, electric grinders, electric wrenches, electric screwdrivers, electric hammers, electric impact drills, concrete vibrators, and electric planers. The electrical device is not specially limited in the embodiments of the present application.

For the convenience of illustration, the following embodiments are illustrated with the electrical device being a vehicle 1000 as an example.

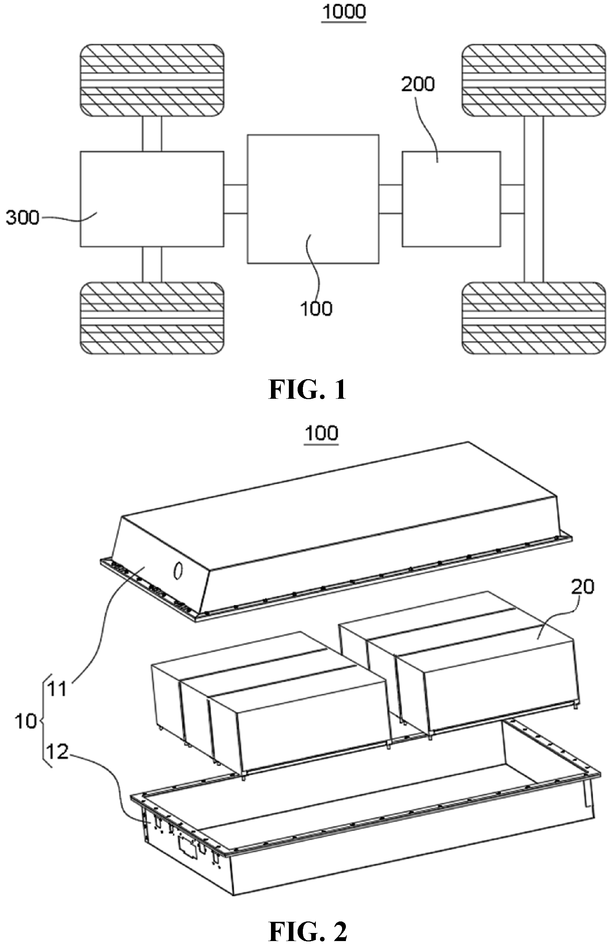

Referring to FIG. 1, FIG. 1 is a schematic structural diagram of a vehicle 1000 provided in some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 includes a box body 10 and a battery cell 20, where the battery cell 20 is accommodated within the box body 10. The box 10 is used to provide an accommodating space for the battery cell 20, and the box 10 can be of various structures. In some embodiments, the box 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space. The first portion 11 and the second portion 12 may each be of a hollow structure with an opening at one end, where the opening side of the first portion 11 covers the opening side of the second portion 12. Of course, the box 10 formed by the first portion 11 and the second portion 12 may be of a variety of shapes, such as a cylinder and a rectangular solid.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated in the box 10. Of course, the battery 100 may also be in the form of a battery module first formed by the plurality of battery cells 20 being connected in series or in parallel or in parallel-series connection, then the plurality of battery modules may be connected in series or in parallel or in parallel-series connection to form a whole, and accommodated in the box 10. The battery 100 may further include other structures. For example, the battery 100 may further include a bus component for electrically connecting the plurality of battery cells 20.

Each battery cell 20 may be a secondary battery cell or a primary battery cell; or may be a lithium-sulfur battery cell, a sodium-ion battery cell or a magnesium-ion battery cell, but is not limited thereto. The battery cell 20 can be in a cylinder shape, a flat body shape, a cuboid shape or other shapes.

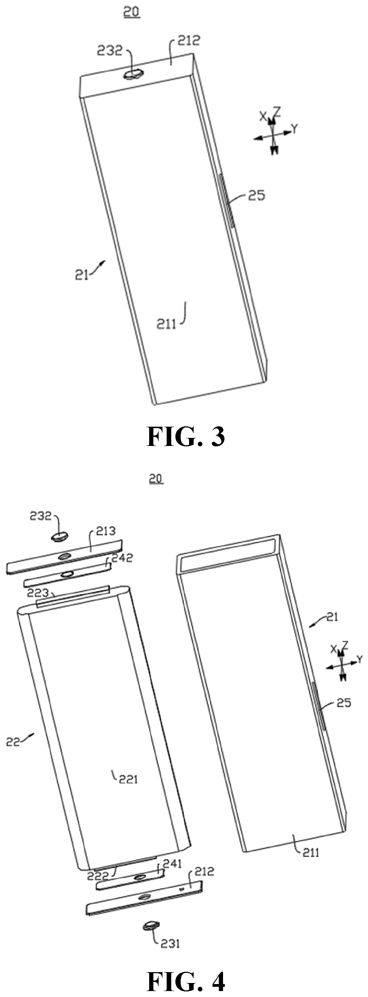

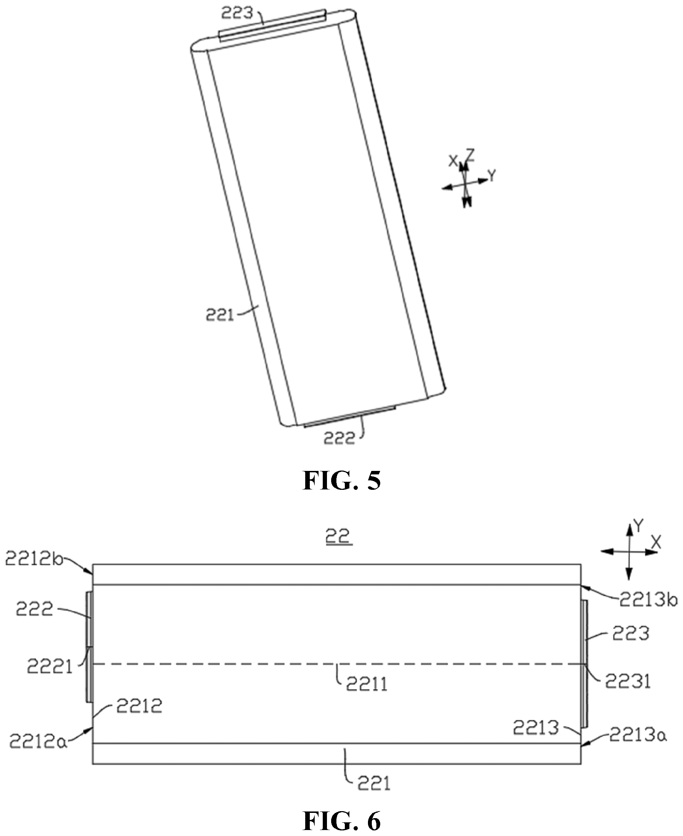

Referring to FIG. 3, FIG. 4, FIG. 5, and FIG. 6, FIG. 3 is a schematic structural diagram of a battery cell 20 provided in some embodiments of the present application. FIG. 4 is an exploded view of a battery cell 20 provided in some embodiments of the present application. FIG. 5 is a schematic structural diagram of an electrode assembly provided in some embodiments of the present application. FIG. 6 is a schematic front view of an electrode assembly 22 provided in some embodiments of the present application. An embodiment of the present application provides a battery cell 20. The battery cell 20 includes a shell 21 and an electrode assembly 22, and the electrode assembly 22 is accommodated in the shell 21. The electrode assembly 22 includes a main body portion 221, a first tab 222, and a second tab 223, the first tab 222 and the second tab 223 respectively protrude from two ends of the main body portion 221. The first tab 222 and the second tab 223 are asymmetrically arranged.

The battery cell 20 refers to a smallest unit constituting a battery 100.

The shell 22 includes at least one end cap and a case 211. The case 211 has an accommodating space with at least one end open, and the accommodating space is configured to accommodate the electrode assembly 22. The end cap is connected to the case 211 and closes an opening.

The end cap refers to a component which covers the opening of the case 211 to isolate an internal environment of the battery cell 20 from an external environment. Without limitation, the shape of the end cap 212 may be adapted to the shape of the case 211 to fit the case 211. Optionally, the end cap may be made of a material (e.g., an aluminum alloy) with a certain hardness and strength, accordingly, the end cap is not prone to deformation when being subjected to extrusion and collisions, such that the battery cell 20 can have higher structural strength, and the reliability performance can also be improved. The end cap may also be made of various materials, such as copper, iron, aluminum, stainless steel, aluminum alloy, and plastic, which is not specially limited in the embodiment of the present application. In some embodiments, the battery cell 20 further includes an insulating element. The insulating element is arranged on an inner side of the end cap, and the insulating element may be configured to isolate an electrical connection component in the case 211 from the end cap, thereby reducing the risk of short circuit. Exemplarily, the insulating element may be made of plastic, rubber, and the like.

The case 211 is a component configured to fit the end cap to form the internal environment of the battery cell 20, wherein the formed internal environment can be used for accommodating the electrode assembly 22, an electrolyte, and other components. The case 211 and the end cap may be independent components, an opening may be provided in the case 211, and the end cap covers the opening at the opening to form the internal environment of the battery cell 21. Without limitation, it is also possible to integrate the end cap and the case 211. Specifically, the end cap and the case 211 may first form a common connecting face before other components are placed into the case, and when the interior of the case 211 needs to be encapsulated, the end cap then covers the case 211. The case 211 may be of various shapes and various sizes, such as a rectangular solid shape, a cylindrical shape, or a hexagonal prism shape. Specifically, the shape of the case 211 can be determined according to the specific shape and size of the electrode assembly 22. The case 211 can be made of various materials such as copper, iron, aluminum, stainless steel, aluminum alloy and plastic, which is not specially limited in the embodiment of the present application.

The electrode assembly 22 is a component in the battery cell 20 where an electrochemical reaction occurs. One or more electrode assemblies 22 may be included within the case 21. The electrode assembly 22 is mainly formed by winding or stacking a positive electrode plate and a negative electrode plate, and a separator is generally arranged between the positive electrode plate and the negative electrode plate. The parts of the positive electrode plate and the negative electrode plate having active substances constitute a main body portion 221 of the electrode assembly 22, and the parts of the positive electrode plate and the negative electrode plate having no active substances respectively constitute tabs. The positive electrode tab and the negative electrode tab are located at two ends of the main body portion 221 respectively. In a charging and discharging process of the battery 100, the positive electrode active substance and the negative electrode active substance react with the electrolyte.

The first tab 222 and the second tab 223 are opposite in polarity. When the first tab 222 is a positive electrode tab, the second tab 223 is a negative electrode tab. When the first tab 222 is a negative electrode tab, the second tab 223 is a positive electrode tab. The first tab 222 and the second tab 223 respectively protrude from two ends of the main body portion 221, that is, the electrode assembly 22 extends from two ends of the main body portion 221 as tabs.

"The first tab 222 and the second tab 223 are asymmetrically arranged" means that there is no plane of symmetry that allows the first tab 222 and the second tab 223 to completely overlap after the electrode assembly 22 is folded along that plane of symmetry. In other words, there is no certain plane of symmetry that allows the first tab 222 and the second tab 223 are mirror-symmetric about that plane of symmetry. For example, differences in size, shape. etc. of the first tab 222 and the second tab 223 can lead to asymmetry between the first tab 222 and the second tab 223. For another example, although the first tab 222 and the second tab 223 are the same in size and shape, their positions on the main body portion 221 do not correspond to each other, which also cause the first tab 222 and the second tab 223 to be asymmetrical.

The first tab 222 and the second tab 223 of the battery cell 20 are asymmetrically arranged. Compared with a solution in the prior art where two tabs of the battery cell 20 are symmetrically arranged, the first tab 222 and the second tab 223 of the electrode assembly 22 of the battery cell 20 have no axis of symmetry, the first tab 222 and the second tab 223 are stressed unevenly, such that the electrode assembly 22 does not easily rotate, and thus the first tab 222 and the second tab 223 are not easily torn, which is beneficial to prolonging the service life of the battery cell 20.

Referring to FIGS. 3, 4, 5 and 6, in some embodiments, the first tab 222 and the second tab 223 respectively protrude from two ends of the main body portion 221 in the first direction. The first tab 222 has a first intermediate section 2221 parallel to the first direction, and the second tab 223 has a second intermediate section 2231 parallel to the first direction. The first intermediate section 2221 is spaced apart from the second intermediate section 2231 in a second direction, and the second direction intersects with the first direction.

In the first direction, the main body portion 221 has two opposite ends, the first tab 222 protrudes from one end of the main body portion 221, and the second tab 223 protrudes from the other end of the main body portion 221. Based on the positions of the first tab 222 and the second tab 223, the two ends of the main body portion 221 can be determined, thereby determining the first direction. Referring to FIGS. 3, 4, 5 and 6, the first direction may be a direction X shown in the figures.

The second direction intersects with the first direction. An angle between the second direction and the first direction may be an acute angle or a right angle. Referring to FIGS. 3, 4, 5 and 6, the second direction may be a direction Y shown in the figures. At this point, the second direction is perpendicular to the first direction.

The first intermediate section 2221 is a virtual plane parallel to the first direction and passing through the center point of the first tab 222. In the second direction, maximum distances from the first intermediate section 2221 to the two ends of the first tab 222 are equal. Please refer to FIG. 6, where the position of the first intermediate section 2221 is shown by a dashed line.

The second intermediate section 2231 is a virtual plane parallel to the first direction and passing through the center point of the second tab 223. In the second direction, maximum distances from the second intermediate section 2231 to the two ends of the second tab 223 are equal. Please refer to FIG. 6, where the position of the second intermediate section 2231 is shown by a dashed line.

The first intermediate section 2221 does not overlap the second intermediate section 2231. In the second direction, the first intermediate section 2221 and the second intermediate section 2231 are spaced apart. At this time, even though the first tab 222 and the second tab 223 have the same shape and structure, the first tab 222 and the second tab 223 are still asymmetrically arranged because the first intermediate section 2221 of the first tab 222 and the second intermediate section 2231 of the second tab 223 do not overlap.

A distance exists between the first intermediate section 2221 of the first tab 222 and the second intermediate section 2231 of the second tab 223 in the second direction, and the first intermediate section 2221 and the second intermediate section 2231 are not in the same plane. In this way, positions of the first tab 222 and the second tab 223 in the first direction can be staggered. When the battery cell 20 is subjected to vibration, the first tab 222 and the second tab 223 are stressed unevenly, such that the electrode assembly 20 does not easily rotate under the action of an external force, and thus the first tab 222 and the second tab 223 are not easily torn, which is beneficial to prolonging the service life of the battery cell 20. In addition, since the first intermediate section 2221 is spaced apart from the second intermediate section 2231 in the second direction, a center distance between the first tab 222 and the second tab 223 is increased, and heat generated by the first tab 222 and heat generated by the second tab 223 are not prone to affecting each other, which is beneficial to prolonging the service life of the battery cell 20.

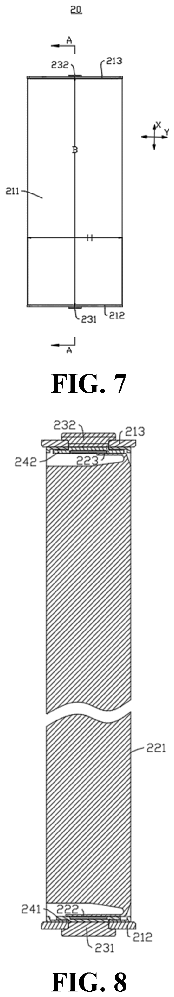

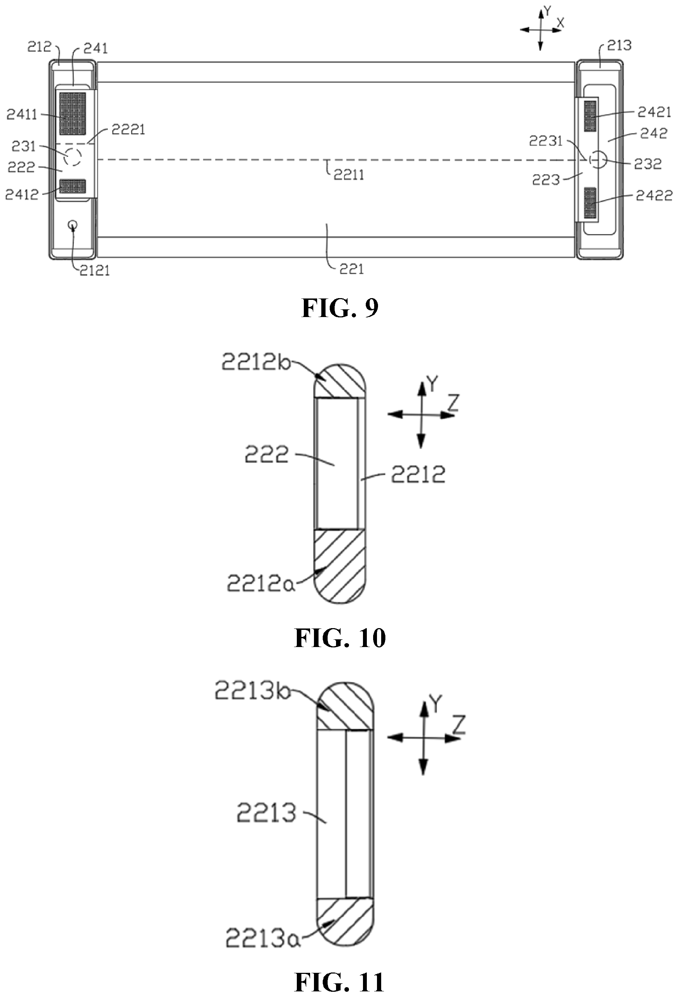

Referring to FIGS. 7, 8, and 9, FIG. 7 is a schematic front view of a battery cell 20 provided in some embodiments of the present application. FIG. 8 is a sectional view of a position A-A in FIG. 7. FIG. 9 is a simplified schematic diagram of welding of an electrode assembly 22 provided in some embodiments of the present application. In some embodiments, the shell 21 includes a first wall portion, and the first wall portion is provided with an electrolyte injection hole 2121. In the first direction, the first tab 222 is arranged opposite to the first wall portion, and the first tab 222 is closer to the first wall portion than the second tab 223. The projection of the electrolyte injection hole 2121 does not overlap the projection of the first tab 222.

The electrolyte injection hole 2121 is a through hole configured to inject an electrolyte into the battery cell 20.

The first wall portion is a wall portion on the shell 21 that is provided with the electrolyte injection hole 2121. For example, when the electrolyte injection hole 2121 is provided in a side wall of the case 211, the first wall portion is the side wall of the case 211. When the electrolyte injection hole 2121 is provided in the end cap, the first wall portion is the end cap.

The first wall portion is arranged opposite to the first tab 222 in the first direction, and the first tab 222 is closer to the first wall portion than the second tab 223. For example, the shell 21 includes a first end cap 212, a second end cap 213 and a case 211. Two ends of the case 211 in the first direction have openings, and the first end cap 212 and the second end cap 213 respectively close the openings in the two ends of the case 211. The first end cap 212 is provided with the electrolyte injection hole 2121, and then the first end cap 212 is the first wall portion. In the first direction, the first end cap 212 and the second end cap 213 are both arranged opposite to the first tab 222, but the first tab 222 is closer to the first end cap 212 than the second tab 223, and the second tab 223 is closer to the second end cap 213 than the first tab 222.

In the first direction, the projection of the electrolyte injection hole 2121 does not overlap the projection of the first tab 222. At this time, the first tab 222 is located on an outer side of a projection of a hole wall face of the electrolyte injection hole 2121.

By ensuring that the projection of the electrolyte injection hole 2121 does not overlap the projection of the first tab 222, the first tab 222 can avoid the electrolyte injection hole 2121, making the first tab 222 and the electrolyte injection hole 2121 not prone to interference. During electrolyte injection, the first tab 222 is not prone to blocking the electrolyte injection hole 2121.

Referring to FIGS. 6, 7, 8, 9 and 10, FIG. 10 is a schematic top view of an electrode assembly provided in some embodiments of the present application. The main body portion 221 has a first end face 2212 at one end in the first direction, and the first tab 222 protrudes from the first end face 2212. The first end face 2212 includes a first region 2212a and a second region 2212b. In the second direction, the first region 2212a and the second region 2212b are located on two sides of the first tab 222 respectively, and the first region 2212a and the second region 2212b are regions on the first end face 2212 where no tab is arranged. A maximum length of the first region 2212a is greater than a maximum length of the second region 2212b. In the first direction, the projection of the electrolyte injection hole 2121 is located in the first region 2212a.

The first end face 2212 is an end face on the main body portion 221 that is provided with the first tab 222. The first end face 2212 includes the first region 2212a and the second region 2212b. In the second direction, the first region 2212a and the second region 2212b are located on two sides of the first tab 222 respectively. Alternatively, the first tab 222 is located between the first region 2212a and the second region 2212b in the second direction.

To better illustrate the positions of the first region 2212a and the second region 2212b, please refer to FIG. 10. In FIG. 10, the first region 2212a is shown with left-slanted lines, and the second region 2212b is shown with right-slanted lines.

A maximum length of the first region 2212a in the second direction is greater than a maximum length of the second region 2212b in the second direction. In the first direction, the projection of the electrolyte injection hole 2121 falls in the first region 2212a. Referring to FIG. 10, when the electrode assembly 22 is a wound electrode assembly, the maximum length of the first region 2212a in the second direction is a maximum distance from a lower end of the first tab 222 in the second direction to a bending region at a lower end of the main body portion. The maximum length of the second region 2212b in the second direction is a maximum distance from an upper end of the first tab 222 in the second direction to a bending region at an upper end of the main body portion.

The maximum length of the first region 2212a in the second direction is greater than the maximum length of the second region 2212b in the second direction. Compared with the prior art, the first tab 222 is offset, which can not only make the first tab 222 and the second tab 223 asymmetrically arranged, reducing the risk of the electrode assembly 22 rotating, but can also avoid the electrolyte injection hole 2121, reducing the risk of the first tab 222 blocking the electrolyte injection hole 2121 during electrolyte injection.

Referring to FIG. 11, FIG. 11 is a schematic bottom view of an electrode assembly provided in some embodiments of the present application. In some embodiments, the main body portion 221 has a second end face 2213 at the other end in the first direction, and the second tab 223 protrudes from the second end face 2213. The second end face 2213 includes a third region 2213a and a fourth region 2213b. In the second direction, the third region 2213a and the fourth region 2213b are located on two sides of the second tab 223 respectively. A maximum length of the third region 2213a in the second direction is equal to a maximum length of the fourth region 2213b in the second direction.

Referring to FIGS. 6, 7, 8, 10 and 12, FIG. 12 is a simplified schematic diagram of welding of an electrode assembly 22 provided in some other embodiments of the present application. In some other embodiments, a shell 21 includes a first wall portion, and the first wall portion is provided with a pressure relief mechanism 25. In the first direction, a first tab 222 is arranged opposite to the first wall portion, and the first tab 222 is closer to the first wall portion than a second tab 223. A projection of the pressure relief mechanism 25 does not overlap the projection of the first tab 222.

The pressure relief mechanism 25 is a component configured to be opened when an internal pressure or temperature of the battery cell 20 reaches a burst initiation pressure, thereby relieving the internal pressure of the battery cell 20.

The first wall portion is a wall portion on the shell 21 that is provided with the pressure relief mechanism 25. For example, when the pressure relief mechanism 25 is arranged on a side wall of the case 211, the first wall portion is the side wall of the case 211. When the pressure relief mechanism 25 is arranged on the end cap, the first wall portion is the end cap.

The first wall portion is arranged opposite to the first tab 222 in the first direction, and the first tab 222 is closer to the first wall portion than the second tab 223. For example, the shell 21 includes a first end cap 212, a second end cap 213 and a case 211. Two ends of the case 211 in the first direction have openings, and the first end cap 212 and the second end cap 213 respectively close the openings in the two ends of the case 211. The first end cap 212 is provided with the pressure relief mechanism 25, and then the first end cap 212 is the first wall portion. In the first direction, the first end cap 212 and the second end cap 213 are both arranged opposite to the first tab 222, but the first tab 222 is closer to the first end cap 212 than the second tab 223, and the second tab 223 is closer to the second end cap 213 than the first tab 222.

In the first direction, the projection of the pressure relief mechanism 25 does not overlap the projection of the first tab 222. At this time, the projection of the first tab 222 is completely located on an outer side of the projection of the pressure relief mechanism 25.

By ensuring that the projection of the pressure relief mechanism 25 does not overlap the projection of the first tab 222, the first tab 222 can avoid the pressure relief mechanism 25, such that the first tab 222 and the pressure relief mechanism 25 are not prone to interference, which is not prone to affecting pressure relief of the pressure relief mechanism 25.

Referring to FIGS. 6, 7, 8, 10, and 12, in some other embodiments, the main body portion 221 has a first end face 2212 at one end in the first direction, and the first tab 222 protrudes from the first end face 2212. The first end face 2212 includes the first region 2212a and the second region 2212b. In the second direction, the first region 2212a and the second region 2212b are located on two sides of the first tab 222 respectively. A maximum length of the first region 2212a is greater than a maximum length of the second region 2212b. in the first direction, the projection of the pressure relief mechanism 25 is located in the first region 2212a.

The first end face 2212 is an end face on the main body portion 221 that is provided with the first tab 222. The first end face 2212 includes the first region 2212a and the second region 2212b. In the second direction, the first region 2212a and the second region 2212b are located on two sides of the first tab 222 respectively. Alternatively, the first tab 222 is located between the first region 2212a and the second region 2212b in the second direction.

A maximum length of the first region 2212a in the second direction is greater than a maximum length of the second region 2212b in the second direction. In the first direction, the projection of the pressure relief mechanism 25 falls in the first region 2212a.

The maximum length of the first region 2212a in the second direction is greater than the maximum length of the second region 2212b in the second direction. Compared with the prior art, the first tab 222 is offset, which can not only make the first tab 222 and the second tab 223 asymmetrically arranged, reducing the risk of the electrode assembly 22 rotating, but can also avoid the pressure relief mechanism 25, such that the first tab 222 is not prone to affecting pressure relief of the pressure relief mechanism 25.

Referring to FIGS. 6, 7, 8, 9 and 10, in some embodiments, in the second direction, the width of the first tab 222 is less than the width of the second tab 223.

"In the second direction, the width of the first tab 222 is less than the width of the second tab 223" means that in the second direction, the maximum width of the first tab 222 is less than the minimum width of the second tab 223.

By making the width of the first tab 222 less than the width of the second tab 223, the first tab 222 can better avoid the electrolyte injection hole 2121 or the pressure relief mechanism 25, and thus the first tab 222 is not prone to affecting electrolyte injection of the electrolyte injection hole 2121 or pressure relief of the pressure relief mechanism 25.

Referring to FIGS. 6, 7, 8, 9 and 10, in some embodiments, in the first direction, a height by which the first tab 222 protrudes from the main body portion 221 is greater than a height by which the second tab 223 protrudes from the main body portion 221.

"In the first direction, a height by which the first tab 222 protrudes from the main body portion 221 is greater than a height by which the second tab 223 protrudes from the main body portion 221" means that in the first direction, a minimum height by which the first tab 222 protrudes from the main body portion 221 is greater than a maximum height by which the second tab 223 protrudes from the main body portion 221.

It should be noted that during measuring the height by which the first tab 222 protrudes from the main body portion 221 in the first direction, if the first tab 222 is in a bent state, it is necessary to straighten the first tab 222 (so that the first tab 222 is parallel to the first direction) before taking the measurement. Similarly, during measuring the height by which the second tab 223 protrudes from the main body portion 221 in the first direction, if the second tab 223 is in a bent state, it is necessary to straighten the second tab 223 (so that the second tab 223 is parallel to the first direction) before taking the measurement.

The width of the first tab 222 is less than the width of the second tab 223, which makes a welding area of the first tab 222 when it is welded to a conductive structure smaller than a welding area of the second tab 223 when it is welded to a corresponding conductive structure, making a current flow area at a welding position of the first tab 222 and the conductive structure smaller. By making the height by which the first tab 222 protrudes from the main body portion 221 greater than the height by which the second tab 223 protrudes from the main body portion 221, the welding area between the first tab 222 and the conductive structure is increased, thereby increasing the current flow area at the welding position of the first tab 222 and the conductive structure.

Please refer to FIGS. 6, 7, 8, 9 and 10. In some embodiments, the battery cell 20 includes a first conductive element 241 and a second conductive element 242. The first tab 222 is welded to the first conductive element 241 to form a first weld mark region with an area of S₁. The second tab 223 s welded to the second conductive element 242 to form a second weld mark region with an area of S₂, and 0.8≤S₁/S₂≤1.2 is satisfied.

The first conductive element 241 is a conductive component welded to the first tab 222. The first conductive element 241 can be a first end cap 212, a first electrode terminal 231, or a first current collector component. The first tab 222 is connected to the first conductive element 241 to facilitate the output or input of electrical energy of the battery cell 20.

The first tab 222 is welded to the first conductive element 241 to form the first weld mark region, and S₁ represents the area of the first weld mark region. Please refer to FIG. 9. The first weld mark region is the part located on the first conductive element 241 in the figure and filled with a pattern.

The second conductive element 242 is a conductive component welded to the second tab 223. The second conductive element 242 can be a second end cap 213, a second electrode terminal 232, or a second current collector component. The second tab 223 is connected to the second conductive element 242 to facilitate the output or input of electrical energy of the battery cell 20.

The second tab 223 is welded to the second conductive element 242 to form the second weld mark region, and S₂ represents the area of the second weld mark region. Please refer to FIG. 9. The second weld mark region is the part located on the second conductive element 242 in the figure and filled with a pattern.

A ratio of the area of the first weld mark region to the area of the second weld mark region can be: S₁/S₂=0.8, 0.82, 0.85, 0.88, 0.9, 0.92, 0.95, 0.98, 1, 1.02, 1.05, 1.08, 1.1, 1.12, 1.15, 1.18, 1.2, etc.

The ratio of the area of the first weld mark region to the area of the second weld mark region is between 0.8 and 1.2, indicating that the areas of the first weld mark region and the second weld mark region are approximately equal. Thus, a current flow area at a connection position of the first tab 222 and the first conductive element 241 is approximately the same as a current flow area at a connection position of the second tab 223 and the second conductive element 242.

In some embodiments, 0.9≤S₁/S₂≤1.1.

The ratio of the area of the first weld mark region to the area of the second weld mark region can be: S₁/S₂=0.9, 0.91, 0.92, 0.93, 0.94, 0.95, 0.96, 0.97, 0.98, 0.99, 1, 1.01, 1.02, 1.03, 1.04, 1.05, 1.06, 1.07, 1.08, 1.09, 1.1, etc.

The ratio of the area of the first weld mark region to the area of the second weld mark region is between 0.9 and 1.1, indicating that the areas of the first weld mark region and the second weld mark region are closer. Thus, the current flow area at the connection position of the first tab 222 and the first conductive element 241 is approximately the same as the current flow area at the connection position of the second tab 223 and the second conductive element 242.

Referring to FIGS. 6, 7, 8, 9 and 10, in some embodiments, the battery cell 20 includes a first electrode terminal 231 and a first adapter, and the first electrode terminal 231 is arranged on the shell 21. The first adapter connects the first electrode terminal 231 and the first tab 222. The first adapter includes a first conductive element 241.

The first electrode terminal 231 is electrically connected to the first tab 222 through the first adapter to output or input electric energy of the battery cell 20. The first electrode terminal 231 may be arranged on the case 211, or on the end cap. Please refer to FIG. 9. In the embodiment shown in FIG. 9, the position of the first electrode terminal 231 is indicated by a dashed line. At this time, the first electrode terminal 231 is arranged on the first end cap 212.

The first adapter can be of a sheet-like structure, that is, the first adapter can be an adapter sheet.

In the embodiment shown in FIG. 9, the first conductive element 241 is an adapter sheet. In some other embodiments, the first conductive element 241 may further include other conductive structures besides the adapter sheet.

The first tab 222 is electrically connected to the first electrode terminal 231 through the first adapter, and the first adapter and the first tab 222, as well as the first adapter and the first electrode terminal 231, can be welded separately, which facilitates manufacturing.

Referring to FIGS. 6, 7, 8, 9 and 10, in some embodiments, the first weld mark region includes a first weld mark portion 2411 and a second weld mark portion 2412, and in the second direction, the first weld mark portion 2411 and the second weld mark portion 2412 are located on two sides of the first electrode terminal 231 respectively.

The first weld mark portion 2411 and the second weld mark portion 2412 are two parts of the first weld mark region respectively. In the second direction, the first electrode terminal 231 is located between the first weld mark portion 2411 and the second weld mark portion 2412.

An area of the first weld mark portion 2411 is S₃, an area of the second weld mark portion 2412 is S₄, and then an area of the first weld mark region is S₁=S₃+S₄.

During manufacturing, the first tab 222 and the first conductive element 241 can be welded first, and then the first conductive element 241 and the first electrode terminal 231 can be welded.

In the second direction, the first weld mark portion 2411 and the second weld mark portion 2412 are arranged on the two sides of the first electrode terminal 231 respectively. That is, the first tab 222 is welded to the first adapter on both sides of the first electrode terminal 231. In this way, the first tab 222 is restricted on both sides of the first electrode terminal 231, so that the first tab 222 is not prone to swing when the battery cell 20 is vibrated, which is conducive to improving the structural stability of the electrode assembly 22 and improving the service life of the battery cell 20.

Referring to FIGS. 6, 7, 8, 9 and 10, in some embodiments, the battery cell 20 includes a second electrode terminal 232 and a second adapter, and the second electrode terminal 232 is arranged on the shell 21. The second adapter connects the second electrode terminal 232 and the second tab 223. The second adapter includes the second conductive element 242.

The second electrode terminal 232 is electrically connected to the second tab 223 through the second adapter to output or input electric energy of the battery cell 20. The second electrode terminal 232 may be arranged on the case 211, or on the end cap. Please refer to FIG. 9. In the embodiment shown in FIG. 9, the position of the second electrode terminal 232 is indicated by a dashed line. At this time, the second electrode terminal 232 is arranged on the second end cap 213.

The second adapter can be of a sheet-like structure, that is, the second adapter can be an adapter sheet.

In the embodiment shown in FIG. 7, the second conductive element 242 is an adapter sheet. In some other embodiments, the second conductive element 242 may further include other conductive structures besides the adapter sheet.

The second tab 223 is electrically connected to the second electrode terminal 232 through the second adapter, and the second adapter and the second tab 223, as well as the second adapter and the second electrode terminal 232, can be welded separately, which facilitates manufacturing.

Referring to FIGS. 6, 7, 8, 9 and 10, in some embodiments, the second weld mark region includes a third weld mark portion 2421 and a fourth weld mark portion 2422, and in the second direction, the third weld mark portion and 2421 the fourth weld mark portion 2422 are located on two sides of the second electrode terminal 232 respectively.

The third weld mark portion 2421 and the fourth weld mark portion 2422 are two parts of the second weld mark region respectively. In the second direction, the second electrode terminal 232 is located between the third weld mark portion 2421 and the fourth weld mark portion 2422.

An area of the third weld mark portion 2421 is S₅, an area of the fourth weld mark portion 2422 is S₆, and then an area of the second weld mark region is S₂=S₅+S₆.

During manufacturing, the second tab 223 and the second conductive element 242 can be welded first, and then the second conductive element 242 and the second electrode terminal 232 can be welded.

In the second direction, the third weld mark portion 2421 and the fourth weld mark portion 2422 are arranged on the two sides of the second electrode terminal 232 respectively. That is, the second tab 223 is welded to the second adapter on both sides of the second electrode terminal 232. In this way, the second tab 223 is restricted on both sides of the second electrode terminal 232, so that the second tab 223 is not prone to swing when the battery cell 20 is vibrated, which is conducive to improving the structural stability of the electrode assembly 22 and improving the service life of the battery cell 20.

In some embodiments, the first tab 222 is a negative electrode tab, and the second tab 223 is a positive electrode tab.

Generally speaking, heat generated by the positive electrode tab is higher than that generated by the negative electrode tab. In some embodiments of the present application, the width of the negative electrode tab is smaller than the width of the positive electrode tab, and the height by which the negative electrode tab protrudes from the main body portion 221 is greater than the height by which the positive electrode tab protrudes from the main body portion 221. In comparison, a cross-sectional area of the negative electrode tab perpendicular to its extension direction is smaller than a cross-sectional area of the positive electrode tab perpendicular to its extension direction. The current flow area of the positive electrode tab is slightly larger than that of the negative electrode tab, thereby reducing the heat generated by the positive electrode tab.

Referring to FIGS. 6, 7, 8, 9, 10 and 13, FIG. 13 is a schematic front view of an electrode assembly provided in some other embodiments of the present application. In some embodiments, the main body portion 221 has a third intermediate section 2211 parallel to the first direction. The third intermediate section 2211 coincides with the second intermediate section 2231, and the third intermediate section 2211 is spaced apart from the first intermediate section 2221 in the second direction. Or in the second direction, the first intermediate section 2221 and the second intermediate section 2231 are located on two sides of the third intermediate section 2211.

The third intermediate section 2211 is a virtual plane parallel to the first direction and passing through the center point of the main body portion 221. In the second direction, maximum distances from the third intermediate section 2211 to the two ends of the main body portion 221 are equal. Please refer to FIGS. 6, 9 and 12, where the position of the third intermediate section 2211 is shown by a dashed line.

Please refer to FIG. 9. The third intermediate section 2211 coincides with the second intermediate section, that is, the third intermediate section 2211 and the second intermediate section 2231 are located in the same plane. The third intermediate section 2211 does not coincide with the first intermediate section 2221. In the second direction, the first intermediate section 2221 and the third intermediate section 2211 are spaced apart. The third intermediate section 2211 and the first intermediate section 2221 are not in the same plane.

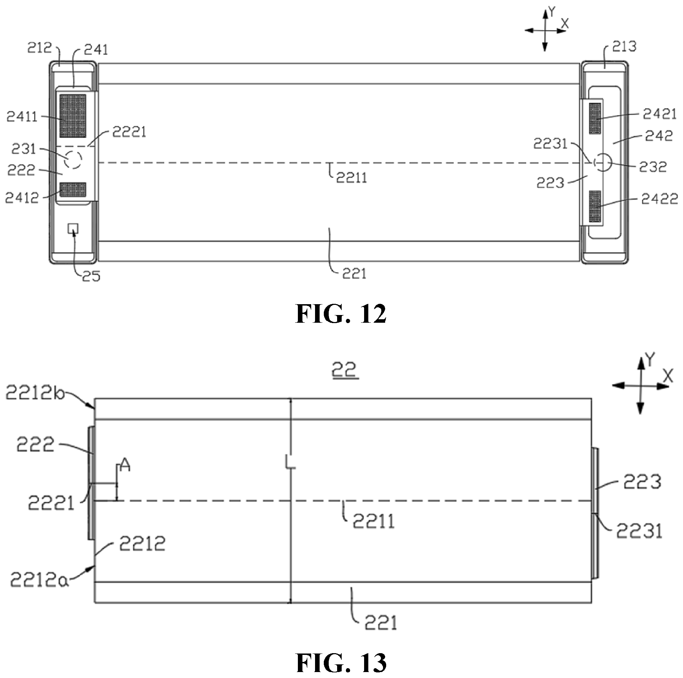

Please refer to FIG. 13. The third intermediate section 2211 does not coincide with the first intermediate section 2221. In the second direction, the first intermediate section 2221 and the third intermediate section 2211 are spaced apart. The third intermediate section 2211 and the first intermediate section 2221 are not in the same plane. The third intermediate section 2211 does not coincide with the second intermediate section 2231. In the second direction, the second intermediate section 2231 and the third intermediate section 2211 are spaced apart. The third intermediate section 2211 and the second intermediate section 2231 are not in the same plane. In the second direction, the third intermediate section 2211 is located between the first intermediate section 2221 and the second intermediate section 2231.

When the third intermediate section 2211 coincides with the second intermediate section 2231 and the third intermediate section 2211 is spaced apart from the first intermediate section 2221 in the second direction, the first tab 222 deviates from the third intermediate section 2211, thus a center distance between the first tab 222 and the second tab 223 is increased, and heat generated by the first tab 222 and heat generated by the second tab 223 are not prone to affecting each other, which is beneficial to prolonging the service life of the battery cell 20. In the second direction, when the first intermediate section 2221 and the second intermediate section 2231 are located on two sides of the third intermediate section 2211, the first tab 222 can deviate upward from the third intermediate section 2211 in the second direction, the second tab 223 can deviate downward from the third intermediate section 2211 in the second direction, and thus the center distance between the first tab 222 and the second tab 223 is further increased, such that the heat generated by the first tab 222 and the heat generated by the second tab 223 are not likely to affect each other, which is beneficial to prolonging the service life of the battery cell 20.

Please refer to FIG. 23. In the second direction, a distance between the first intermediate section 2221 and the second intermediate section 2231 is A, a maximum dimension of the main body portion 221 is L, and 0.05≤A/L≤0.5 is satisfied.

A represents the distance between the first intermediate section 2221 and the second intermediate section 2231 in the second direction. L represents the maximum dimension of the main body portion 221 in the second direction.

A ratio of the distance between the first intermediate section 2221 and the second intermediate section 2231 in the second direction to the maximum dimension of the main body portion 221 in the second direction can be: A/L≤0.05, 0.1, 0.15, 0.2, 0.25, 0.3, 0.35, 0.4, 0.45, 0.5, etc.

By making the ratio of the distance between the first intermediate section 2221 and the second intermediate section 2231 to the maximum dimension of the main body portion 221 in the second direction between 0.05 and 0.5, the distance between the first intermediate section 2221 and the second intermediate section 2231 is larger, the distance between the first tab 222 and the second tab 223 is greater, and thus the heat generated by the first tab and the heat generated by the second tab are less likely to affect each other, which is more beneficial to prolonging the service life.

In some embodiments, 0.1≤A/L≤0.3.

A ratio of the distance between the first intermediate section 2221 and the second intermediate section 2231 in the second direction to the maximum dimension of the main body portion 221 in the second direction can be: A/L≤0.1, 0.12, 0.15, 0.18, 0.2, 0.22, 0.25, 0.28, 0.3, etc.

By making the ratio of the distance between the first intermediate section 2221 and the second intermediate section 2231 to the maximum dimension of the main body portion 221 in the second direction between 0.1 and 0.3, the distance between the first intermediate section 2221 and the second intermediate section 2231 is larger, and the heat generated by the first tab 222 and the heat generated by the second tab 223 are less likely to affect each other, which is beneficial to prolonging the service life of the battery cell 20. Furthermore, the widths of the first tab 222 and the second tab 223 can also be set larger, which ensures the current flow areas of the first tab 222 and the second tab 223 to a certain extent.

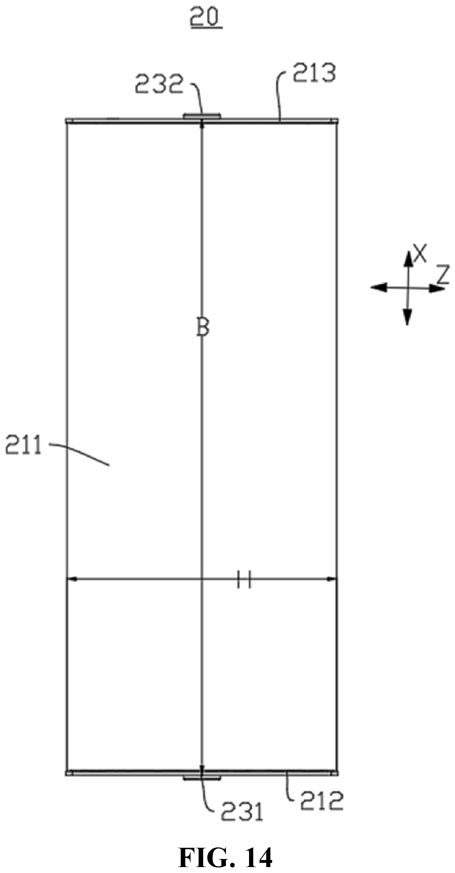

Referring to FIGS. 7 and 14, FIG. 14 is a schematic front view of a battery cell 20 provided in some embodiments of the present application. In some embodiments, the shell 21 is a square shell, a length of the shell 21 in the second direction is H, a length of the shell 21 in the first direction is B, a thickness of the shell 21 is D, and B/H≥2.4 and H≥D are satisfied. The first direction is a width direction of the shell 21, and the second direction is a height direction of the shell 21.

Referring to FIG. 7 and FIG. 14, a thickness direction of the shell is a direction Z shown in the figures.

H represents the height of the shell 21, B represents the width of the shell 21, and D represents the thickness of the shell 21. The width of the shell 21 is the largest, and the height of the shell 21 is greater than or equal to the thickness of the shell 21.

A ratio of the width of the shell 21 to the height of the shell 21 can be: B/H=2.4, 2.5, 2.6, 2.7, 2.8, 2.9, 3, etc.

An aspect ratio of the shell 21 is greater than or equal to 2.4, an internal space of such battery cell 20 is small. Adopting the above asymmetric tab design can not only make the first tab 222 and the second tab 223 subjected to uneven forces, such that the electrode assembly 22 does not easily rotate, and thus the first tab 222 and the second tab 223 are not easily torn, which is beneficial to prolonging the service life of the battery cell 20. It can also make full use of the internal space of the battery cell 20 and thus improve the energy density of the battery cell 20.

Optionally, B/H≥3.

The ratio of the width of the shell 21 to the height of the shell 21 can be: B/H=3, 3.1, 3.2, 3.3, 3.4, 3.5, 3.6, 3.7, 3.8, 3.9, 4, 4.1, 4.2, 4.3, 4.4, etc.

An aspect ratio of the shell 21 is greater than or equal to 3, an internal space of such battery cell 20 is smaller. Adopting the above asymmetric tab design can not only make the first tab 222 and the second tab 223 subjected to uneven forces, such that the electrode assembly 22 does not easily rotate, and thus the first tab 222 and the second tab 223 are not easily torn, which is beneficial to prolonging the service life of the battery cell 20. It can also make full use of the internal space of the battery cell 20 and thus improve the energy density of the battery cell 20.

In some embodiments, the first tab 222 and the second tab 223 respectively protrude from two ends of the body body 221 in the first direction. For example, the shell 21 includes a case 211, a first end cap 212, and a second end cap 213. In the first direction, two ends of the case 211 have openings, and the first end cap 212 and the second end cap 213 respectively close the openings in the two ends of the case 211.

The first end cap 212 and the second end cap 213 respectively close the openings in the two ends of the case 211, the first tab 222 can be electrically connected to a conductive structure on the first end cap 212, and the second tab 223 can be electrically connected to a conductive structure on the second end cap 213, making manufacturing simple and convenient.

An embodiment of the present application further provides a battery 100. The battery 100 includes the above battery cell 20.

An embodiment of the present application further provides an electrical device. The electrical device includes the above battery cell 20 or the above battery 100.

According to some embodiments of the present application, please refer to FIGS. 1 to 10.

An embodiment of the present application provides a battery cell 20. The battery cell 20 includes a shell 21 and an electrode assembly 22, and the electrode assembly 22 is accommodated in the shell 21. The electrode assembly 22 includes a main body portion 221, a first tab 222, and a second tab 223, the first tab 222 and the second tab 223 respectively protrude from two ends of the main body portion 221. The first tab 222 and the second tab 223 are asymmetrically arranged. The first tab 222 and the second tab 223 of the battery cell 20 are asymmetrically arranged. Compared with a solution in the prior art where two tabs of the battery cell 20 are symmetrically arranged, the first tab 222 and the second tab 223 of the electrode assembly 22 of the battery cell 20 have no axis of symmetry, the first tab 222 and the second tab 223 are stressed unevenly, such that the electrode assembly 22 does not easily rotate, and thus the first tab 222 and the second tab 223 are not easily torn, which is beneficial to prolonging the service life of the battery cell 20.

The first tab 222 and the second tab 223 respectively protrude from two ends of the main body portion 221 in the first direction. The first tab 222 has a first intermediate section 2221 parallel to the first direction, and the second tab 223 has a second intermediate section 2231 parallel to the first direction. The first intermediate section 2221 is spaced apart from the second intermediate section 2231 in a second direction, and the second direction intersects with the first direction. A distance exists between the first intermediate section 2221 of the first tab 222 and the second intermediate section 2231 of the second tab 223 in the second direction, and the first intermediate section 2221 and the second intermediate section 2231 are not in the same plane. In this way, positions of the first tab 222 and the second tab 223 in the first direction can be staggered. When the battery cell 20 is subjected to vibration, the first tab 222 and the second tab 223 are stressed unevenly, such that the electrode assembly 20 does not easily rotate under the action of an external force, and thus the first tab 222 and the second tab 223 are not easily torn, which is beneficial to prolonging the service life of the battery cell 20. In addition, since the first intermediate section 2221 is spaced apart from the second intermediate section 2231 in the second direction, a center distance between the first tab 222 and the second tab 223 is increased, and heat generated by the first tab 222 and heat generated by the second tab 223 are not prone to affecting each other, which is beneficial to prolonging the service life of the battery cell 20.

The shell 21 includes a first wall portion, and the first wall portion is provided with an electrolyte injection hole 2121 or a pressure relief mechanism 25. In the first direction, a first tab 222 is arranged opposite to the first wall portion. The first tab is closer to the first wall portion than the second tab 223. A projection of the electrolyte injection hole 2121 or the pressure relief mechanism 25 does not overlap the projection of the first tab 222. By ensuring that the projection of the electrolyte injection hole 2121 or the pressure relief mechanism 25 does not overlap the projection of the first tab 222, the first tab 222 can avoid the electrolyte injection hole 2121 or the pressure relief mechanism 25, making the first tab 222 and the electrolyte injection hole 2121 or the pressure relief mechanism 25 not prone to interference.

In the second direction, the width of the first tab 222 is less than the width of the second tab 223. In the first direction, a height by which the first tab 222 protrudes from the main body portion 221 is greater than a height by which the second tab 223 protrudes from the main body portion 221. By making the width of the first tab 222 less than the width of the second tab 223, the first tab 222 can better avoid the electrolyte injection hole 2121 or the pressure relief mechanism 25, and thus the first tab 222 is not prone to affecting electrolyte injection of the electrolyte injection hole 2121 or pressure relief of the pressure relief mechanism 25. The width of the first tab 222 is less than the width of the second tab 223, which makes a welding area of the first tab 222 when it is welded to a conductive structure smaller than a welding area of the second tab 223 when it is welded to a corresponding conductive structure, making a current flow area at a welding position of the first tab 222 and the conductive structure smaller. By making the height by which the first tab 222 protrudes from the main body portion 221 greater than the height by which the second tab 223 protrudes from the main body portion 221, the welding area between the first tab 222 and the conductive structure is increased, thereby increasing the current flow area at the welding position of the first tab 222 and the conductive structure.

The above description merely provides preferred embodiments of the present application, and is not intended to limit the present application. For those skilled in the art, the present application may have various modifications and alterations. Any modification, equivalent replacement, improvement, and the like made within the spirit and principle of the present application shall fall within the scope of protection of the present application.

## Claims

1. A battery cell, comprising:
a shell; and
an electrode assembly accommodated in the shell, wherein the electrode assembly comprises a main body portion, a first tab, and a second tab, the first tab and the second tab respectively protrude from two ends of the main body portion, and
the first tab and the second tab are asymmetrically arranged.

2. The battery cell according to claim 1, wherein the first tab and the second tab respectively protrude from two ends of the main body portion in a first direction; and
the first tab has a first intermediate section parallel to the first direction, the second tab has a second intermediate section parallel to the first direction, the first intermediate section is spaced apart from the second intermediate section in a second direction, and the second direction intersects with the first direction.

3. The battery cell according to claim 2, wherein the shell comprises a first wall portion, and the first wall portion is provided with an electrolyte injection hole; and
in the first direction, the first tab is arranged opposite to the first wall portion, and a projection of the electrolyte injection hole does not overlap a projection of the first tab.

4. The battery cell according to claim 3, wherein the main body portion has a first end face at one end in the first direction, the first tab protrudes from the first end face, and the first end face comprises a first region and a second region;
in the second direction, the first region and the second region are located on two sides of the first tab respectively, and a maximum length of the first region is greater than a maximum length of the second region; and
in the first direction, the projection of the electrolyte injection hole is located in the first region.

5. The battery cell according to any one of claims 2 to 4, wherein the shell comprises a first wall portion, and the first wall portion is provided with a pressure relief mechanism; and
in the first direction, the first tab is arranged opposite to the first wall portion, and a projection of the pressure relief mechanism does not overlap a projection of the first tab.

6. The battery cell according to claim 5, wherein the main body portion has a first end face at one end in the first direction, the first tab protrudes from the first end face, and the first end face comprises a first region and a second region;
in the second direction, the first region and the second region are located on the two sides of the first tab respectively, and a maximum length of the first region is greater than a maximum length of the second region; and
in the first direction, the projection of the pressure relief mechanism is located in the first region.

7. The battery cell according to any one of claims 3 to 6, wherein in the second direction, a width of the first tab is less than a width of the second tab.

8. The battery cell according to claim 7, wherein in the first direction, a height by which the first tab protrudes from the main body portion is greater than a height by which the second tab protrudes from the main body portion.

9. The battery cell according to claim 8, wherein the battery cell comprises a first conductive element and a second conductive element, the first tab is welded to the first conductive element to form a first weld mark region with an area of S₁, the second tab is welded to the second conductive element to form a second weld mark region with an area of S₂, and 0.8≤S₁/S₂≤1.2 is satisfied.

10. The battery cell according to claim 9, wherein 0.9≤S₁/S₂≤1.1.

11. The battery cell according to claim 9 or 10, wherein the battery cell comprises a first electrode terminal and a first adapter, the first electrode terminal is arranged on the shell, the first adapter connects the first electrode terminal and the first tab, and the first adapter comprises the first conductive element.

12. The battery cell according to claim 11, wherein the first weld mark region comprises a first weld mark portion and a second weld mark portion, and in the second direction, the first weld mark portion and the second weld mark portion are located on two sides of the first electrode terminal respectively.

13. The battery cell according to any one of claims 9 to 12, wherein the battery cell comprises a second electrode terminal and a second adapter, the second electrode terminal is arranged on the shell, the second adapter connects the second electrode terminal and the second tab, and the second adapter comprises the second conductive element.

14. The battery cell according to claim 13, wherein the second weld mark region comprises a third weld mark portion and a fourth weld mark portion, and in the second direction, the third weld mark portion and the fourth weld mark portion are located on two sides of the second electrode terminal respectively.

15. The battery cell according to any one of claims 8 to 14, wherein the first tab is a negative electrode tab, and the second tab is a positive electrode tab.

16. The battery cell according to any one of claims 2 to 15, wherein the main body portion has a third intermediate section parallel to the first direction;
the third intermediate section coincides with the second intermediate section, and the third intermediate section is spaced apart from the first intermediate section in the second direction; or
in the second direction, the first intermediate section and the second intermediate section are located on two sides of the third intermediate section.

17. The battery cell according to any one of claims 2 to 16, wherein in the second direction, a distance between the first intermediate section and the second intermediate section is A, a maximum dimension of the main body portion is L, and 0.05≤A/L≤0.5 is satisfied.

18. The battery cell according to claim 17, wherein 0.1≤A/L≤0.3.

19. The battery cell according to any one of claims 2 to 18, wherein the shell is a square shell, a length of the shell in the second direction is H, a length of the shell in the first direction is B, a thickness of the shell is D, and B/H≥2.4 and H≥D are satisfied; and
the first direction is a width direction of the shell, and the second direction is a height direction of the shell.

20. The battery cell according to claim 19, wherein B/H≥3.

21. The battery cell according to any one of claims 1 to 20, wherein the first tab and the second tab respectively protrude from two ends of the main body portion in the first direction; and
the shell comprises:
a case, wherein in the first direction, two ends of the case have openings; and
a first end cap and a second end cap respectively closing the openings in the two ends of the case.

22. A battery, comprising the battery cell according to any one of claims 1 to 21.

23. An electrical device, comprising the battery cell according to any one of claims 1 to 21 or the battery according to claim 22.
